# EUROPEAN PATENT APPLICATION

(11) **EP 4 474 048 A1**
(43) Date of publication of application: **11.12.2024**
(21) Application number: 23770284.0
(22) Date of filing: 21.02.2023
(51) Int. Cl.: B01J 23/63, B01D 53/94, B01J 27/055, F01N 3/10, F01N 3/28

(54) **EXHAUST GAS PURIFICATION CATALYST**

(30) Priority: 14.03.2022 JP 2022039443
(71) Applicant: CATALER CORPORATION, Kakegawa-shi, Shizuoka 437-1492 (JP)
(72) Inventor: ITO, Masaya, Kakegawa-shi, Shizuoka 437-1492 (JP); ONOE, Ryota, Kakegawa-shi, Shizuoka 437-1492 (JP); FUJITA, Nozomi, Kakegawa-shi, Shizuoka 437-1492 (JP); TAKASU, Ryosuke, Kakegawa-shi, Shizuoka 437-1492 (JP); SHIRAYAMA, Yodai, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2023/006095
(87) International publication number: WO 2023/176325

(57) **Abstract**

According to the present invention, an exhaust gas purifying catalyst with a high NOx storing characteristic is provided. The exhaust gas purifying catalyst disclosed herein includes a base material and a catalyst layer. The catalyst layer has a multilayer structure of at least two layers. A first layer includes an upstream side catalyst layer formed from an exhaust gas inflow side end part of the exhaust gas purifying catalyst toward an exhaust gas outflow side direction, and a downstream side catalyst layer formed from an exhaust gas outflow side end part of the exhaust gas purifying catalyst toward an exhaust gas inflow side direction. Each of the upstream side catalyst layer and the downstream side catalyst layer contains at least Pd and/or Rh as a catalyst metal and OSC containing Ce. A second layer contains at least Pt as the catalyst metal and a NOx storing material. Here, when the CeO₂ quantity in the upstream side catalyst layer is C1 and the CeO₂ quantity in the downstream side catalyst layer is C2 in the first layer, a relation of C1 < C2 is satisfied.

## Description

### [Technical Field]

The present invention relates to an exhaust gas purifying catalyst. More specifically, the present invention relates to an exhaust gas purifying catalyst that is disposed in an exhaust path of an internal-combustion engine and purifies the exhaust gas emitted from the internal-combustion engine.

The present application claims priority based on Japanese Patent Application No. 2022-039443 filed on March 14, 2022, the entire contents of which application are incorporated herein by reference.

### [Background Art]

The exhaust gas emitted from an internal-combustion engine of a vehicle or the like includes toxic substances such as nitrogen oxide (NOx), hydro-carbon (HC), and carbon monoxide (CO). For efficient reaction and removal of these toxic substances from the exhaust gas, exhaust gas purifying catalysts have been used conventionally. For example, Patent Literatures 1 to 3 are cited as the conventional technical literatures related to the exhaust gas purifying.

For example, Patent Literature 1 discloses a NOx adsorbing catalyst including a first layer containing one or a plurality of platinum group metals, a ceria-containing material, and an alkali metal or alkaline-earth metal, and a second layer containing a plurality of precious metals, a ceria-containing material, and an inorganic oxide, in which the content of the ceria-containing material in the first layer is more than the content of the ceria-containing material in the second layer. According to this patent literature, by the formation of the first layer and the second layer having an oxidizing function and a NOx storing function separately in the respective layers, the oxidizing activity and the NOx storing characteristic are improved.

### [Citation List]

### [Patent Literatures]

[Patent Literature 1] Japanese Translation of PCT International Application Publication No. 2020-515393
[Patent Literature 2] Japanese Translation of PCT International Application Publication No. 2011-526203
[Patent Literature 3] Japanese Translation of PCT International Application Publication No. 2021-528247

### [Summary of Invention]

### [Technical Problem]

In recent vehicles, by the way, driving control for internal-combustion engines to save the fuel consumption itself, such as "fuel cut" (hereinafter also referred to as "F/C") or "idling stop" (to stop an operation of an internal-combustion engine when a vehicle stops), has been performed for the purpose of suppressing CO₂ emission from the internal-combustion engine. For example, after the F/C, the air-fuel ratio of the exhaust gas is lean (that is, an atmosphere in which oxygen is excessive relative to a theoretical air-fuel ratio) and thus, a catalyst metal is in an oxidized state; therefore, the NOx purifying ratio decreases. Accordingly, just separating the oxidizing function and the NOx storing function does not enable the suitable NOx storing function, which may result in the decrease in oxidizing function.

The present invention has been made in view of the above circumstances, and an object is to provide an exhaust gas purifying catalyst with a high NOx storing characteristic.

### [Solution to Problem]

An exhaust gas purifying catalyst disclosed herein is an exhaust gas purifying catalyst that is disposed in an exhaust pipe of an internal-combustion engine and purifies exhaust gas emitted from the internal-combustion engine. The exhaust gas purifying catalyst includes a base material and a catalyst layer formed on a surface of the base material. The catalyst layer has a multilayer structure of at least two layers including a first layer that is relatively far from the surface of the base material and a second layer that is closer to the surface of the base material. The first layer includes an upstream side catalyst layer formed from an exhaust gas inflow side end part of the exhaust gas purifying catalyst toward an exhaust gas outflow side direction, and a downstream side catalyst layer formed from an exhaust gas outflow side end part of the exhaust gas purifying catalyst toward an exhaust gas inflow side direction. Each of the upstream side catalyst layer and the downstream side catalyst layer contains Pd and/or Rh as a catalyst metal and an OSC material containing Ce. The second layer contains at least Pt as the catalyst metal and a NOx storing material. Here, when it is assumed that a value obtained by converting, in terms of oxide, a Ce quantity in the OSC material included in the upstream side catalyst layer and the downstream side catalyst layer in the first layer is a CeO₂ quantity, the CeO₂ quantity in the upstream side catalyst layer is C1, and the CeO₂ quantity in the downstream side catalyst layer is C2. At this time, a relation of C1 < C2 is satisfied.

The OSC material is a component that has an operation of storing oxygen in the exhaust gas when the air-fuel ratio of the exhaust gas is lean and releasing the stored oxygen when the air-fuel ratio of the exhaust gas is rich (that is, an atmosphere in which fuel is excessive relative to a theoretical air-fuel ratio), which is for relieving the atmosphere variation. By adjusting the CeOz quantity in the OSC material containing Ce in the exhaust gas purifying catalyst, HC, CO, and NOx included in the exhaust gas can be purified efficiently. Even when the air-fuel ratio of the exhaust gas is lean, in particular, the emission ofNOx can be reduced suitably.

In a preferred aspect, the ratio (C2/C1) of the C2 to the C1 is 12 to 3. Thus, additionally, HC, CO, and NOx included in the exhaust gas can be purified efficiently.

In a preferred aspect, the NOx storing material contains at least one kind selected from the group consisting of Ba, Cs, Sr, K, Ca, and Mg. The coat quantity of the second layer may be 100 g/L or more and 155 g/L or less per liter of a volume of the base material. The content of the NOx storing material included in the second layer may be 10 g/L or more and 40 g/L or less. Additionally, the second layer may be formed in a part corresponding to 75% to 100% of a length of the base material from the exhaust gas outflow side end part toward the exhaust gas inflow side direction. Thus, the NOx purifying performance can be improved further.

In a preferred aspect, the catalyst layer includes a third layer that is relatively closer to the surface of the base material than the second layer. The third layer may contain at least one kind selected from the group consisting of Pd, Pt, and Rh. Thus, HC, CO, and NOx included in the exhaust gas can be purified efficiently.

### [Brief Description of Drawings]

Fig. 1 is a schematic diagram of an exhaust gas purifying system according to one embodiment.
Fig. 2 is a perspective diagram schematically illustrating an exhaust gas purifying catalyst according to one embodiment.
Fig. 3 is a partial cross-sectional diagram schematically illustrating a structure of a catalyst layer in the exhaust gas purifying catalyst according to one embodiment.
Fig. 4 is a partial cross-sectional diagram schematically illustrating a structure of a catalyst layer in another example of the exhaust gas purifying catalyst according to one embodiment.

### [Description of Embodiment]

Preferred embodiments of the present invention will be described below with reference to the drawings. Note that matters that are other than matters particularly mentioned in the present specification and that are necessary for the implementation of the present invention can be grasped as design matters of those skilled in the art based on the prior art in the relevant field. The present invention can be carried out based on the contents disclosed in this specification and technical common sense in the field. In the drawings below, the members and parts with the same operation are denoted with the same reference signs and the overlapping description may be omitted or simplified. The size relation (length, width, thickness, and the like) in each drawing does not always reflect the actual size relation. In the present specification, the notation "Ato B" (A and B are arbitrary numerals) for a range signifies a value more than or equal to A and less than or equal to B, and also encompasses the meaning of being "preferably more than A" and "preferably less than B".

### <Exhaustgas purifying system>

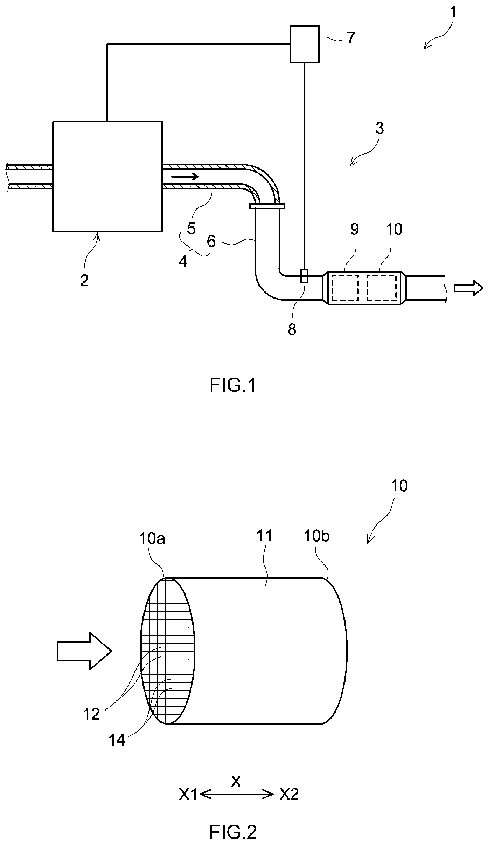

Fig. 1 is a schematic diagram of an exhaust gas purifying system 1. The exhaust gas purifying system 1 includes an internal-combustion engine (engine) 2 and an exhaust gas purifying device 3. The exhaust gas purifying system 1 is configured to purify toxic substances in the exhaust gas emitted from the internal-combustion engine 2, such as HC, CO, or NOx, in the exhaust gas purifying device 3. Note that arrows in Fig. 1 indicate a flowing direction of the exhaust gas. In the description below, along the flow of the exhaust gas, the side closer to the internal-combustion engine 2 is referred to as an upstream side (also referred to as an inflow side or a front side) and the side farther from the internal-combustion engine 2 is referred to as a downstream side (also referred to as an outflow side or a rear side).

The exhaust gas purifying device 3 includes an exhaust path 4, an engine control unit (ECU) 7, a sensor 8, a first catalyst 9, and a second catalyst 10. The exhaust path 4 is an exhaust gas flow channel where the exhaust gas flows. The exhaust path 4 in this embodiment includes an exhaust manifold 5 and an exhaust pipe 6. One end (upstream end part) of the exhaust manifold 5 is connected to an exhaust port (not illustrated) of the internal-combustion engine 2. The other end (downstream end part) of the exhaust manifold 5 is connected to the exhaust pipe 6. In the middle of the exhaust pipe 6, the first catalyst 9 and the second catalyst 10 are disposed in this order from the upstream side.

The first catalyst 9 may be similar to the conventional one, and is not limited in particular. The first catalyst 9 may be, for example, a diesel particulate filter (DPF) that removes PM included in the exhaust gas, a diesel oxidation catalyst (DOC) that purifies HC or CO included in the exhaust gas, a three-way catalyst that purifies NOx, HC, and CO included in the exhaust gas at the same time, a NOx storage-reduction (NSR) catalyst that stores NOx in the normal driving (under a lean condition) and purifies NOx using HC or CO as a reducing agent when a little more fuel is injected (under a rich condition), or the like. The first catalyst 9 may have a function of increasing the temperature of the exhaust gas that flows into the second catalyst 10, for example. Note that the first catalyst 9 is not an essential structure and can be omitted.

The second catalyst 10 is an SCR catalyst. The second catalyst 10 is one example of the exhaust gas purifying catalyst disclosed herein. A structure of the second catalyst 10 will be described below. Note that the arrangement of the first catalyst 9 and the second catalyst 10 may be changed optionally. The number of each of the first catalyst 9 and the second catalyst 10 is not limited in particular and may be more than one. For example, as the first catalyst 9, a DOC and a DFP may be provided in this order from the upstream side. Additionally, a third catalyst, which is not illustrated, may be disposed on the downstream side of the second catalyst 10.

The ECU 7 controls the internal-combustion engine 2 and the exhaust gas purifying device 3. The ECU 7 is electrically connected to the internal-combustion engine 2 and the sensor (for example, pressure sensor, oxygen sensor, temperature sensor, or the like) 8 disposed at each part of the exhaust gas purifying device 3. The information detected by the sensor 8 is received by the ECU 7 as electric signals through an input port (not illustrated). The ECU 7 receives the information such as a driving state of the vehicle and the amount, temperature, pressure, and the like of the exhaust gas emitted from the internal-combustion engine 2. The ECU 7 transmits a control signal through an output port (not illustrated) in accordance with the received information, for example. The ECU 7 controls the driving, for example, controls the fuel injection or ignition of the internal-combustion engine 2 and controls to regulate the amount of intake air. Moreover, the ECU 7 controls to drive and stop the exhaust gas purifying device 3 in accordance with the driving state of the internal-combustion engine 2, the amount of exhaust gas emitted from the internal-combustion engine 2, and the like. Note that the structure of the ECU 7 may be similar to the conventional structure without particular limitations. The ECU 7 is, for example, a processor or an integrated circuit.

### <Exhaust gas purifying catalyst>

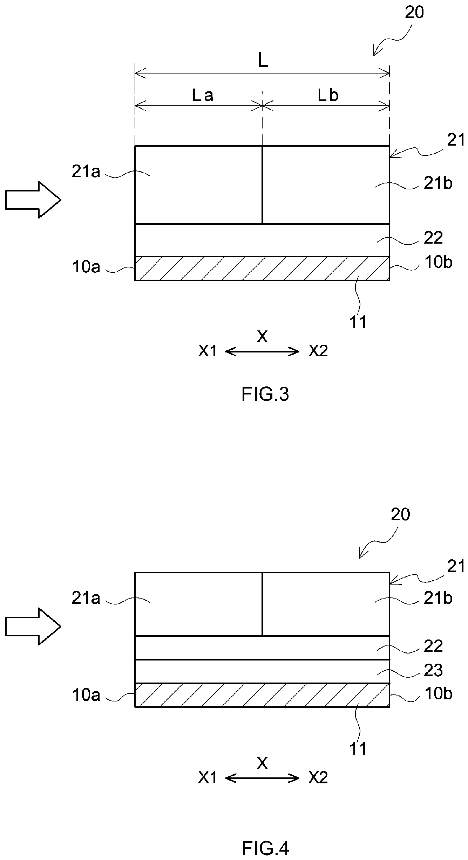

Fig. 2 is a perspective diagram schematically illustrating the second catalyst 10. Fig. 3 is a diagram schematically illustrating a structure of a catalyst layer 20 in the exhaust gas purifying catalyst and Fig. 4 is a diagram schematically illustrating another example of the catalyst layer 20 in the exhaust gas purifying catalyst. Note that arrows in Fig. 2 to Fig. 4 indicate the flow of the exhaust gas. That is to say, in Fig. 2, the left side corresponds to the upstream side (front side) of the exhaust path 4, which is relatively close to the internal-combustion engine 2, and the right side corresponds to the downstream side (rear side) of the exhaust path 4, which is relatively far from the internal-combustion engine 2. Moreover, in Fig. 2, reference sign X denotes a cylinder axis direction of the second catalyst 10. The second catalyst 10 is disposed in the exhaust path 4 so that the cylinder axis direction X extends along the flowing direction of the exhaust gas. In the description below, in the cylinder axis direction X, one direction X1 is referred to as the upstream side (also referred to as exhaust gas inflow side or front side) and the other direction X2 is referred to as the downstream side (also referred to as exhaust gas outflow side or rear side).

The second catalyst 10 has a function of purifying NOx in the exhaust gas. The second catalyst 10 includes a base material 11 with a straight flow structure and the catalyst layer 20 (see Fig. 3). In this embodiment, the base material 11 has a honeycomb structure. The base material 11 includes a plurality of cells (cavities) 12 arrayed regularly in the cylinder axis direction X, and partition walls (ribs) 14 that section the plurality of cells 12. An end part of the second catalyst 10 in the one direction X1 is an end part 10a on the exhaust gas inflow side (upstream side) and an end part of the second catalyst 10 in the other direction X2 is an end part 10b on the exhaust gas outflow side (downstream side).

The base material 11 forms the frame of the second catalyst 10. The base material 11 is not particularly limited and various materials and various modes that have conventionally been employed in this type of applications can be used. The base material 11 may be formed of, for example, a ceramic such as cordierite, aluminum titanate, or silicon carbide, or an alloy such as stainless steel (SUS), a Fe-Cr-Al-based alloy, or a Ni-Cr-Al-based alloy. In this embodiment, the outer shape of the base material 11 is a cylindrical shape. However, the outer shape of the base material 11 is not limited in particular and may be, for example, an elliptical cylindrical shape, a polygonal cylindrical shape, a pipe-like shape, a foam-like shape, a pellet shape, a fibrous shape, or the like.

Although not particularly limited, the length (total length) of the base material 11 along the cylinder axis direction X may be generally 10 mm to 500 mm, for example 50 mm to 300 mm. The volume of the base material 11 may be generally 0.1 L to 10 L, for example 1 L to 5 L. In the present specification, "the volume of the base material" refers to the apparent volume (bulk capacity) including the capacity of the cells 12 on the inside in addition to the volume (pure volume) of the base material 11 itself.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 can be designed in consideration of, for example, the flow rate, the component, and the like of the exhaust gas to be supplied to the second catalyst 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a circular shape, or various other geometric shapes. The base material 11 includes the partition walls 14 that section the cells 12. The partition wall 14 faces the cell 12 and sections between the adjacent cells 12. Although not particularly limited, the thickness of the partition wall 14 (the size in a direction orthogonal to the surface, and this definition similarly applies to the description below) may be generally 10 µm to 500 µm, for example 20 µm to 100 µm from the viewpoint of improving the mechanical strength or reducing the pressure loss.

The catalyst layer 20 is provided on a surface of the base material 11, specifically on the partition walls 14. However, the catalyst layer 20 may entirely or partially permeate into the catalyst layer 20. The catalyst layer 20 is typically a porous body with a number of communicating pores. The catalyst layer 20 is a field to purify the exhaust gas. The exhaust gas having entered the second catalyst 10 is in contact with the catalyst layer 20 while flowing in the flow channel (cell 12) of the second catalyst 10. Thus, the toxic substances in the exhaust gas are purified. For example, HC and CO included in the exhaust gas are oxidized by the catalyst function of the catalyst layer 20 and are converted (purified) into water, carbon dioxide, and the like. In addition, for example, NOx is reduced by the catalyst function of the catalyst layer 20 and converted (purified) into nitrogen.

As illustrated in Fig. 3, the catalyst layer 20 disclosed herein is formed to have a multilayer structure with at least two layers including a first layer 21 that is relatively far from the surface of the base material 11 and a second layer 22 that is closer to the surface of the base material 11. The first layer 21 includes an upstream side catalyst layer 21a formed from the end part 10a on the exhaust gas inflow side toward an exhaust gas outflow side direction and a downstream side catalyst layer 21b formed from the end part 10b on the exhaust gas outflow side toward an exhaust gas inflow side direction, in the flowing direction of the exhaust gas (see the arrow in Fig. 3). In the art disclosed herein, each of the upstream side catalyst layer 21a and the downstream side catalyst layer 21b in the first layer 21 contains at least palladium (Pd) and/or rhodium (Rh) as the catalyst metal, and an OSC material containing Ce. The second layer 22 contains at least platinum (Pt) as the catalyst metal and a NOx storing material. When the value obtained by converting the Ce quantity in the OSC material in each of the upstream side catalyst layer 21a and the downstream side catalyst layer 21b in terms of oxide is the CeOz quantity, the CeOz quantity in the upstream side catalyst layer 21a is expressed by C1 and the CeOz quantity in the downstream side catalyst layer 21b is expressed by C2. At this time, C1 and C2 are configured to satisfy a relation of C1 < C2. In this structure, HC, CO, and NOx included in the exhaust gas can be purified efficiently.

Each of the upstream side catalyst layer 21a and the downstream side catalyst layer 21b in the first layer 21 of the exhaust gas purifying catalyst disclosed herein contains Pd and/or Rh as the catalyst metal. Pd is highly active as the oxidation catalyst in particular, and in the catalyst layer 20, exhibits the high oxidizing operation particularly for CO and HC among the toxic substances in the exhaust gas. Moreover, Pd has the property that it does not easily lose its activity even in the oxidized state. On the other hand, Rh is highly active as the reduction catalyst in particular, and in the catalyst layer 20, exhibits the high reducing operation particularly for NOx among the toxic substances in the exhaust gas. Rh has a high H₂ generating capability and can efficiently purify the toxic substances in the exhaust gas. Therefore, by containing Pd and/or Rh as the catalyst metal in the first layer 21, it is possible to purify HC, CO, and NOx included in the exhaust gas suitably.

In the art disclosed herein, one kind or two or more kinds of metal species that can function as various oxidation catalysts or reduction catalysts may be included in addition to the necessary component, Pd and/or Rh. For example, a platinum group other than Pd and Rh, that is, platinum (Pt), ruthenium (Ru), osmium (Os), iridium (Ir), and the like are given. As the catalyst metal, the metal species such as silver (Ag), gold (Au), iron (Fe), cobalt (Co), nickel (Ni), or copper (Cu) may be included.

The catalyst metal is preferably in a sufficiently small particulate form from the viewpoint of increasing the contact area with the exhaust gas. The average particle diameter of the catalyst metal may be generally 1 nm to 15 nm, for example 10 nm or less, or furthermore 5 nm or less. Note that, in this specification, the term "average particle diameter" is the average value of the particle diameters based on the number obtained by observation using a transmission electron microscope (TEM).

The content of the catalyst metal (in the case of using two or more kinds of catalyst metals, the total content of the used catalyst metals) in the first layer 21 (that is, the total of the upstream side catalyst layer 21a and the downstream side catalyst layer 21b) is 0.5 g/L or more, preferably 1 g/L or more, and more preferably 2 g/L or more per liter of the volume of the base material 11 in terms of oxide. Containing the catalyst metal in an excess amount is disadvantageous from the perspective of cost. Therefore, the upper limit value of the content of the catalyst metal in the first layer 21 is 8 g/L or less, preferably 7 g/L or less, and more preferably 6 g/L or less per liter of the volume of the base material 11 in terms of oxide.

Each of the upstream side catalyst layer 21a and the downstream side catalyst layer 21b in the first layer 21 includes the oxygen storage capacity (OSC) material containing Ce. The OSC material is a component that has a function (oxygen storing and releasing capability) of storing oxygen in the exhaust gas when the air-fuel ratio of the exhaust gas is lean and releasing the stored oxygen when the air-fuel ratio of the exhaust gas is rich and that has an operation of relieving the atmosphere variation. The OSC material may be a compound containing cerium (Ce). Specific examples of such a compound include a metal oxide containing ceria (CeOz) (Ce-containing oxide) with the high oxygen storing capability. The Ce-containing oxide may contain at least one kind of ceria and complex oxides of ceria and a metal oxide other than ceria (for example, CeO₂-ZrO₂ complex oxide). In addition, the OSC material may be a compound containing Ce, and may be formed of zirconium, titanium, or silicon mainly, for example. If the OSC material contains zirconia (ZrO₂), the OSC material is preferably the CeO₂-ZrO₂ complex oxide because the thermal deterioration of ceria can be suppressed.

The mixing ratio of the CeO₂-ZrO₂ complex oxide is preferably CeO₂/ZrO₂ = 0.1 to 0.9 (preferably 0.15 to 0.7, and more preferably 0.25 to 0.5). When the mixing ratio of the CeO₂-ZrO₂ complex oxide is in this range, the suitable oxygen storing and releasing capability can be achieved. From the viewpoint of improving the heat resistance, the CeO₂-ZrO₂ complex oxide may be a singlecrystal body or a polycrystal body that further contains a metal oxide other than CeOz, for example, a rare earth metal oxide, an alkali metal oxide, an alkaline-earth metal oxide, a transition metal species, or the like.

The first layer 21 may contain, as a carrier material, a metal oxide other than the OSC material containing Ce that can carry the catalyst metal. This carrier material is typically in a powder form (particulate form). The carrier material may be an inorganic porous body with a large specific surface area. As the carrier material, for example, a metal oxide with excellent heat resistance or a solid solution thereof can be preferably used. Specifically, metal oxides such as aluminum oxide (alumina: Al₂O₃), zirconium oxide (ZrO₂), and titanium oxide (TiO₂) are given. The shape (outer shape) of the carrier material is not limited in particular and from the viewpoint of being able to secure the larger specific surface area, the powder form can be preferably used. For example, the average particle diameter of the powder used as the carrier material may be, for example, about 0.1 µm to 20 µm (typically, 0.5 µm to 10 µm and preferably 1 µm to 7 µm). Note that the OSC material containing Ce can function as the carrier material for the catalyst metal. Therefore, in the first layer 21, the aforementioned catalyst metal may also be carried by the OSC material.

The content of the carrier material in the first layer 21 (in the case of using two or more kinds of carrier materials, the total content of the used carrier materials) is preferably 60 g/L to 140 g/L and more preferably 80 g/L to 120 g/L per liter of the volume of the base material 11 in terms of oxide.

In the art disclosed herein, as described above, the first layer 21 includes the upstream side catalyst layer 21a formed from the end part 10a on the exhaust gas inflow side toward the exhaust gas outflow side direction and the downstream side catalyst layer 21b formed from the end part 10b on the exhaust gas outflow side toward the exhaust gas inflow side direction. Then, when it is assumed that the value obtained by converting the Ce quantity in the OSC material included in the upstream side catalyst layer 21a in terms of oxide is the CeOz quantity, the CeOz quantity in the upstream side catalyst layer 21a is C1. Additionally, when it is assumed that the value obtained by converting the Ce quantity in the OSC material included in the downstream side catalyst layer 21b in terms of oxide is the CeO₂ quantity, the CeO₂ quantity in the downstream side catalyst layer 21b is C2. At this time, C1 and C2 are configured to satisfy the relation of C1 < C2. In this structure, HC, CO, and NOx included in the exhaust gas can be purified efficiently.

Although it is not intended to limit the art disclosed herein, the reason why such an effect is obtained is considered as follows. When the air-fuel ratio of the exhaust gas is lean (that is, the atmosphere in which oxygen is excessive relative to the theoretical air-fuel ratio), Pd and/or Rh as the catalyst metal included in the upstream side catalyst layer 21a is in the oxidized state. Therefore, by making the CeOz quantity of the upstream side catalyst layer 21a relatively small, the amount of oxygen in the upstream side catalyst layer 21a can be reduced to activate the catalyst metal. Accordingly, when the air-fuel ratio of the exhaust gas is lean, the purifying efficiency for CO and HC in the upstream side catalyst layer 21a can be improved. When CO and HC are purified suitably in the upstream side catalyst layer 21a, NO can be oxidized and the NOx storing material can store NOx without interruption by HC or CO in the second layer 22 to be described below. When the air-fuel ratio of the exhaust gas becomes rich by the start of the engine (that is, the atmosphere in which the fuel is excessive relative to the theoretical air-fuel ratio), NOx stored in the NOx storing material included in the second layer 22 to be described below is released. In general, when the air-fuel ratio of the exhaust gas is rich, NOx is purified efficiently; therefore, the released NOx is purified suitably in the first layer 21 (the downstream side catalyst layer 21b in particular). In the downstream side catalyst layer 21b, oxygen is supplied sufficiently because the CeOz quantity is relatively large; thus, CO and HC can be suitably purified. As a result, HC, CO, and NOx included in the exhaust gas can be purified efficiently and the NOx storing characteristic can be improved.

Each of the upstream side catalyst layer 21a and the downstream side catalyst layer 21b includes the OSC material containing Ce. When the value obtained by converting the Ce quantity in the OSC material in terms of oxide is the CeOz quantity, the CeOz quantity C1 in the upstream side catalyst layer 21a is set to be less than the CeOz quantity C2 in the downstream side catalyst layer 21b. For example, the CeOz quantity C1 in the upstream side catalyst layer 21a is generally 0.5 g/L or more, preferably 1 g/L or more, and more preferably 2 g/L or more, and is generally 7 g/L or less, preferably 6 g/L or less, and more preferably 5 g/L or less per liter of the volume of the base material. In addition, the CeO₂ quantity C2 in the downstream side catalyst layer 21b is set to be more than the CeO₂ quantity C1 in the upstream side catalyst layer 21a. For example, the CeO₂ quantity C2 in the downstream side catalyst layer 21b is generally 2 g/L or more, preferably 3 g/L or more, and more preferably 4 g/L or more, and is generally 9 g/L or less, preferably 8 g/L or less, and more preferably 7 g/L or less, and may be, for example, 6 g/L or less per liter of the volume of the base material. Note that "the CeO₂ quantity (g/L)" described above can be measured by, for example, inductively coupled plasma (ICP) analysis, an electron probe micro-analyzer (EPMA), an X-ray fluorescence (XRF) analysis, or the like.

The ratio (C2/C1) of the CeO₂ quantity C2 in the downstream side catalyst layer 21b to the CeO₂ quantity C1 in the upstream side catalyst layer 21a is not limited in particular and may be, for example, 1.2 or more (typically, 1.5 or more, for example 1.8 or more, and preferably 2 or more) and 5 or less (preferably 4.5 or less, more preferably 4 or less, and still more preferably 3 or less). According to the knowledge of the present inventors, when C2/C1 is less than 1 (that is, when the CeO₂ quantity C1 in the upstream side catalyst layer 21a is more than the CeO₂ quantity C2 in the downstream side catalyst layer 21b), the NOx purifying ratio decreases. When the ratio C2/C1 is in the aforementioned range, oxygen can be supplied suitably and the NOx storing characteristic of the exhaust gas purifying catalyst can be improved.

The coat quantity (molding quantity) of the upstream side catalyst layer 21a in the first layer 21 is not limited in particular and is preferably, for example, about 80 g/L to 120 g/L (typically, 90 g/L to 110 g/L) per liter of the volume of the base material. The coat quantity (molding quantity) of the downstream side catalyst layer 21b is not limited in particular and is preferably, for example, about 80 g/L to 120 g/L (typically, 90 g/L to 110 g/L) per liter of the volume of the base material. If the coat quantity is too small, the purifying operation of the catalyst layer 20 may decrease. On the other hand, if the coat quantity is too large, the pressure loss when the exhaust gas passes through the cells of the base material 11 may increase.

The upstream side catalyst layer 21a is formed from the end part 10a on the exhaust gas inflow side (upstream side) of the exhaust gas purifying catalyst (base material) toward the exhaust gas outflow side (downstream side) direction. A length La of the upstream side catalyst layer 21a in the cylinder axis direction only needs to be shorter than the total length L of the base material 11 in the cylinder axis direction without particular limitations, and is 10% or more (typically, 15% or more, preferably 20% or more, more preferably 30% or more, and for example 40% or more) and 90% or less (typically 85% or less, preferably 80% or less, more preferably 75% or less, and for example 70% or less) of the length L of the base material 11 in the cylinder axis direction. In an aspect illustrated in Fig. 3, the length La of the upstream side catalyst layer 21a in the cylinder axis direction is formed in a part corresponding to about 50% of the length L (that is, 1/2 of the total length L) of the aforementioned exhaust gas purifying catalyst (base material) in the exhaust gas flowing direction. This is preferable because the upstream side catalyst layer 21a and the downstream side catalyst layer 21b in the first layer 21 can be made remarkably different from each other and the effect of the art disclosed herein can be achieved at a high level.

The downstream side catalyst layer 21b is formed from the end part 10b on the exhaust gas outflow side (downstream side) of the exhaust gas purifying catalyst (base material) toward the exhaust gas inflow side (upstream side) direction. A length Lb of the downstream side catalyst layer 21b in the cylinder axis direction only needs to be shorter than the total length L of the base material 11 in the cylinder axis direction without particular limitations, and is 10% or more (typically, 15% or more, preferably 20% or more, more preferably 30% or more, and for example 40% or more) and 90% or less (typically 85% or less, preferably 80% or less, more preferably 75% or less, and for example 70% or less) of the length L of the base material 11 in the cylinder axis direction. In the aspect illustrated in Fig. 3, the length Lb of the downstream side catalyst layer 21b in the cylinder axis direction is formed in a part corresponding to about 50% of the length L (that is, 1/2 of the total length L) of the aforementioned exhaust gas purifying catalyst (base material) in the cylinder axis direction. This is preferable because the upstream side catalyst layer 21a and the downstream side catalyst layer 21b in the first layer 21 can be made remarkably different from each other and the effect of the art disclosed herein can be achieved at a high level.

The total (La + Lb) of the length La of the upstream side catalyst layer 21a in the cylinder axis direction and the length Lb of the downstream side catalyst layer 21b in the cylinder axis direction typically preferably satisfies L ≤ La + Lb < 2L and more preferably satisfies L ≤ La + Lb < 1.5L. In the aspect illustrated in Fig. 3, La + Lb ≅ L. By satisfying La + Lb ≥ L, the exhaust gas that passes through the partition walls 14 without passing the catalyst layer 20 will not exist; thus, the toxic substances included in the exhaust gas can be purified suitably.

In other words, the exhaust gas purifying catalyst disclosed herein can have a multilayer structure in which the upstream side catalyst layer 21a and the downstream side catalyst layer 21b overlap with each other partially at a central part in the cylinder axis direction. In this case, it is preferable to dispose the downstream side catalyst layer 21b in which the CeO₂ quantity is relatively large on a surface side in contact with the exhaust gas (on the side relatively far from the base material 11).

The second layer 22 of the catalyst layer 20 disclosed herein contains at least Pt as the catalyst metal. Pt has a property of having high reactivity to paraffin and high NO oxidation activity. HC and CO included in the exhaust gas can interrupt such NO oxidation activity of Pt. Thus, by purifying HC and CO as much as possible in the first layer 21 (in particular, the upstream side catalyst layer 21a in the first layer 21) described above, the NO oxidation activity of Pt in the second layer 22 can be maintained.

The second layer 22 in the art disclosed herein may contain, in addition to the necessary component Pt, one kind or two or more kinds of metal species that can function as various oxidation catalysts and reduction catalysts. For example, the platinum group other than Pt, that is, rhodium (Rh), palladium (Pd), ruthenium (Ru), osmium (Os), iridium (Ir), and the like are given. As the catalyst metal, the metal species such as silver (Ag), gold (Au), iron (Fe), cobalt (Co), nickel (Ni), or copper (Cu) may be contained. In addition, the catalyst metal is preferably in a sufficiently small particulate form from the viewpoint of increasing the contact area with the exhaust gas. The average particle diameter may be generally 1 nm to 15 nm, for example 10 nm or less, or furthermore 5 nm or less.

The content of the catalyst metal in the second layer 22 (in the case of using two or more kinds of catalyst metals, the total content of the used catalyst metals) is preferably 0.5 g/L or more, preferably 1 g/L or more, and more preferably 2 g/L or more per liter of the volume of the base material 11 in terms of oxide. Containing the catalyst metal in an excess amount is disadvantageous from the perspective of cost. Therefore, the upper-limit value of the content of the catalyst metal in the first layer 21 is 8 g/L or less, preferably 7 g/L or less, and more preferably 6 g/L or less per liter of the volume of the base material 11 in terms of oxide.

The aforementioned catalyst metal is carried by the carrier material. The carrier material is typically in the powder form (particulate form). The carrier material may be an inorganic porous body with a large specific surface area. As the carrier material, for example, a metal oxide with excellent heat resistance or a solid solution thereof can be preferably used. Specifically, metal oxides such as aluminum oxide (alumina: Al₂O₃), magnesium oxide (magnesia: (MgO), and titanium oxide (titania: TiOz), and the like are given. One kind of these may be used alone or two or more kinds thereof may be used in combination. The average particle diameter of the powder used as the carrier material may be generally about 0.1 µm to 20 µm (for example, 0.5 µm to 10 µm, and preferably 1 µm to 7 µm).

The second layer 22 of the exhaust gas purifying catalyst disclosed herein includes the NOx storing material. The NOx storing material has a function of temporarily storing NOx in the exhaust gas when the air-fuel ratio of the exhaust gas is lean and releasing the stored NOx when the air-fuel ratio is switched to the stoichiometric-rich state. In other words, when the second layer 22 includes the NOx storing material, NOx oxidized by the oxidizing operation of the catalyst metal is stored suitably in the second layer 22. As the NOx storing material described above, it is preferable to use a material (typically, basic material) containing a metal that can donate electrons to NOx. Examples thereof include alkali metals such as potassium (K) and cesium (Cs), alkaline-earth metals such as magnesium (Mg), calcium (Ca), strontium (Sr), and barium (Ba), and the like. In particular, it is preferable to use alkaline-earth metal (barium in particular) because of having the high NOx storing capability. As this material, one kind of these may be used alone or two or more kinds thereof may be used in combination.

If the content of the NOx storing material in the second layer 22 (in the case of using two or more kinds of NOx storing materials, the total content of the used NOx storing materials) is too low, the NOx storing limit quantity (saturation quantity) becomes lower, in which case the toxic substances may be emitted in a lean-bum engine, for example. In view of this, the content of the NOx storing material is 5 g/L or more and preferably 10 g/L or more, and may be 20 g/L or more per liter of the volume of the base material 11 in terms of oxide. On the other hand, if the content of the NOx storing material is too high, the surface of the carrier material or the catalyst metal is covered with the NOx storing material, in which case it may be impossible to obtain the desired catalyst activity stably. Therefore, the upper limit of the content of the NOx storing material is preferably 40 g/L or less, and may be 35 g/L or less or 30 g/L or less in terms of oxide, for example. When the content of the NOx storing material is in such a range, the effect of the art disclosed herein can be achieved at a higher level.

In the second layer 22, another material (typically, inorganic oxide) may be added as a secondary component. Examples of the material that can be added to the second layer 22 include rareearth elements such as lanthanum (La), neodymium (Nd), cerium (Ce), and praseodymium (Pr), transition metal elements such as zirconium (Zr), and other metal elements such as aluminum (Al). Such elements can improve the specific surface area at high temperature without interrupting the catalyst function, thereby being usable suitably as a stabilizer. The aforementioned element typically exists in the second layer 22 as an oxide.

The coat quantity (molding quantity) of the second layer 22 is not limited in particular. If the coat quantity is too small, the purifying operation of the catalyst layer 20 may decrease. Therefore, for example, the coat quantity may be 100 g/L or more, for example 115 g/L or more, or 120 g/L or more per liter of the volume of the base material 11. If the coat quantity is too large, the pressure loss when the exhaust gas passes through the cells of the base material 11 may increase. From such a viewpoint, the upper limit of the coating is preferably 155 g/L or less, and for example, may be 145 g/L or less or 135 g/L or less.

The second layer 22 is formed from the end part 10b on the exhaust gas outflow side (downstream side) of the exhaust gas purifying catalyst (base material) toward the end part 10a on the exhaust gas inflow side (upstream side). In a preferred aspect, the length of the second layer 22 in the cylinder axis direction is preferably 50% or more, more preferably 65% or more, still more preferably 75% or more, and particularly preferably 100% of the length L of the base material 11 in the cylinder axis direction. Thus, the effect of the art disclosed herein can be achieved at the high level.

In a preferred aspect, the exhaust gas purifying catalyst disclosed herein includes a third layer 23 (see Fig. 4) that is relatively closer to the surface of the base material 11 than the second layer 22. The third layer 23 contains at least one kind of catalyst metal selected from the group consisting of Pd, Pt, and Rh.

The third layer 23 of the catalyst layer 20 disclosed herein may contain, in addition to any of Pd, Pt, and Rh, one kind or two or more kinds of the metal species that can function as various oxidation catalysts and reduction catalysts. For example, the platinum group such as ruthenium (Ru), osmium (Os),or iridium (Ir), or the metal species such as silver (Ag), gold (Au), iron (Fe), cobalt (Co), nickel (Ni), or copper (Cu) may be contained. In addition, the catalyst metal is preferably in a sufficiently small particulate form from the viewpoint of increasing the contact area with the exhaust gas. The average particle diameter may be generally 1 nm to 15 nm, for example 10 nm or less, or furthermore 5 nm or less.

The content of the catalyst metal in the third layer 23 (in the case of using two or more kinds of catalyst metals, the total content of the used catalyst metals) is preferably 0.5 g/L or more, preferably 1 g/L or more, and more preferably 2 g/L or more per liter of the volume of the base material 11 in terms of oxide. Containing the catalyst metal in an excess amount is disadvantageous from the perspective of cost. Therefore, the upper-limit value of the content of the catalyst metal in the first layer 21 is 8 g/L or less, preferably 7 g/L or less, and more preferably 6 g/L or less per liter of the volume of the base material 11 in terms of oxide.

The aforementioned catalyst metal is carried by the carrier material. The carrier material is typically in the powder form (particulate form). The carrier material may be an inorganic porous body with a large specific surface area. As the carrier material, for example, a metal oxide with excellent heat resistance or a solid solution thereof can be preferably used. For example, the carrier material given as the example that can be used in the second layer 22 can be employed as appropriate. The metal oxide such as alumina (Al₂O₃) or silica (SiOz) and the like are given as the examples. One kind of these may be used alone or two or more kinds thereof may be used in combination. The average particle diameter of the powder used as the carrier material may be generally about 0.1 µm to 20 µm (for example, 0.5 µm to 10 µm, and preferably 1 µm to 7 µm).

The third layer 23 may include an optional material that does not carry the catalyst metal in addition to the carrier that carries the aforementioned catalyst metal, for example. Examples of the optional material include a CeO₂-ZrO₂ complex oxide that does not carry the catalyst metal, alumina (Al₂O₃), silica (SiO₂), and the like.

The coat quantity (molding quantity) of the third layer 23 is not limited in particular and may be, for example, about 100 g/L to 160 g/L (for example, 110 g/L to 150 g/L) per liter of the volume of the base material 11. The third layer 23 is formed from the end part 10b on the exhaust gas outflow side (downstream side) of the exhaust gas purifying catalyst (base material) toward the end part 10a on the exhaust gas inflow side (upstream side). In a preferred aspect, the length of the second layer 22 in the cylinder axis direction is preferably 50% or more, more preferably 65% or more, still more preferably 75% or more, and particularly preferably 100% of the length L of the base material 11 in the cylinder axis direction.

### 3. Manufacturing method for exhaust gas purifying catalyst

The exhaust gas purifying catalyst including the first layer 21 and the second layer 22 as described above can be manufactured in accordance with the following procedure, for example. Although not limited in particular, the upstream side catalyst layer 21a and the downstream side catalyst layer 21b in the first layer 21, and the second layer 22 that are described above may be formed using different catalyst layer formation slurries. For example, an upstream side catalyst layer formation slurry for forming the upstream side catalyst layer 21a in the first layer 21, a downstream side catalyst layer formation slurry for forming the downstream side catalyst layer 21b in the first layer 21, and a second layer formation slurry for forming the second layer 22 may be prepared.

The upstream side catalyst layer formation slurry and the downstream side catalyst layer formation slurry can be manufactured in such a way that a Pd and/or Rh component, the OSC material containing Ce (for example, CeOz, CeO₂-ZrO₂ complex oxide, or the like), and another component for forming the first layer 21 (for example, the aforementioned carrier material or the like) are mixed in a solvent and prepared into a slurry form. At this time, two kinds of slurries including the slurry in which the CeO₂ quantity is relatively small (upstream side catalyst layer formation slurry) and the slurry in which the CeOz quantity is relatively large (downstream side catalyst layer formation slurry) are prepared.

The second layer formation slurry can be manufactured in such a way that the carrier material carrying at least Pt (for example, alumina or the like), the NOx storing material (typically, nitrate, carbonate, sulfate, or the like of an alkaline-earth metal element), and another component for forming the second layer 22 are mixed in a solvent and prepared into a slurry form. Note that the slurry can contain a binder, various additives, or the like as other optional components. Furthermore, the properties of the slurry, for example the viscosity, the solid content ratio, and the like, may be adjusted as appropriate in accordance with the size of the base material to be used, the mode of the cell, and the like.

The first layer 21 and the second layer 22 can be formed by a conventional method, for example, an impregnation method, a wash-coating method, or the like. In one example, the prepared second layer formation slurry described above is poured into the cells 12 from an end part of the suitable base material (for example, honeycomb base material) and supplied to a predetermined length along the cylinder axis direction X. In this case, the superfluous slurry may be discharged from the cells 12. Next, the base material to which the slurry has been supplied is dried and sintered at a predetermined temperature, so that the second layer 22 can be formed on the surface of the partition wall 14 of the base material 11. The drying may be performed at a temperature of about 200°C to 300°C for 30 minutes to 2 hours, for example. The sintering may be performed at a sintering temperature of generally about 450°C to 1000°C, for example 500°C to 700°C in an oxygen-containing atmosphere (for example, in the air).

Next, after the second layer 22 is formed, the upstream side catalyst layer formation slurry is poured into the cells 12 from one end part of the base material (the end part 10a on the inflow side) and supplied to a predetermined length toward the outflow side direction along the cylinder axis direction X. By performing the drying and sintering process under the condition similar to the above one, the upstream side catalyst layer 21a can be formed. Similarly, the downstream side catalyst layer formation slurry is poured into the cells 12 from the other end part of the base material (the end part 10b on the outflow side) and supplied to a predetermined length toward the inflow side direction along the cylinder axis direction X. By performing the drying and sintering process under the condition similar to the above one, the downstream side catalyst layer 21b can be formed.

The exhaust gas purifying catalyst described above can be used suitably for purifying the exhaust gas emitted from the internal-combustion engines of, in addition to vehicles such as an automobile and a truck, a motorcycle, and a bicycle with a motor, marine products such as a vessel, a tanker, a water bike, a personal watercraft, and an outboard motor, garden products such as a mowing machine, a chain saw, and a trimmer, leisure products such as a golf cart and a four-wheeled buggy, generator sets such as a cogeneration system, an incinerator, and the like.

Although Test Examples of the present invention will be described below, it is not intended to limit the present invention to these Test Examples.

### <First test>

Here, using three kinds of slurries with different compositions, the second layer was formed on the base material, and then the first layer having different structures on the upstream side (front side) and the downstream side (rear side) in the exhaust gas flowing direction was formed; thus, the catalyst layer including the first layer formed of the upstream side catalyst layer and the downstream side catalyst layer, and the second layer was formed.

### 1. Manufacture in each example

### (1) Example 1

First, three kinds of slurries (upstream side catalyst layer formation slurry, downstream side catalyst layer formation slurry, and second layer formation slurry) were prepared. Specifically, first, a Pd nitrate solution (0.1 g as Pd), a Rh nitrate solution (0.17 g as Rh), 12 g of the CeO₂-ZrO₂ complex oxide as the OSC material (2.5 g as CeO₂), and Al₂O₃ powder were mixed with an aqueous solvent to obtain the upstream side catalyst layer formation slurry. Next, a Pd nitrate solution (0.1 g as Pd), a Rh nitrate solution (0.17 g as Rh), 24 g of the CeO₂-ZrO₂ complex oxide as the OSC material (5.0 g as CeOz), and Al₂O₃ powder were mixed with an aqueous solvent to obtain the downstream side catalyst layer formation slurry. Then, 80 g of Al₂O₃ powder carrying 1.4 g of Pt and 20 g of barium oxide (BaO) as the NOx storing material were mixed with an aqueous solvent to obtain the second layer formation slurry.

Using the prepared second layer formation slurry, 100% of the length L of the ceramic base material (cylindrical straight-flow type honeycomb base material with a diameter of 118.4 mm, a length L in the cylinder axis direction of 114.3 mm, and a capacity of 1.26 L) from the end part on the exhaust gas outflow side toward the inflow side direction in the cylinder axis direction (that is, the entire base material) was wash-coated. Note that the coat quantity at this time was 155 g/L with a BaO quantity of 30 g/L. Then, drying and sintering were performed to form the second layer.

Next, using the prepared upstream side catalyst layer formation slurry, 50% of the length L of the base material from the end part on the exhaust gas inflow side toward the outflow side direction in the cylinder axis direction was wash-coated. Note that the coat quantity at this time was 110 g/L with a CeO₂ quantity of 2.94 g/L. Then, drying and sintering were performed to form the upstream side catalyst layer.

Moreover, using the prepared downstream side catalyst layer formation slurry, 50% of the length L of the base material from the end part on the exhaust gas outflow side toward the inflow side direction in the cylinder axis direction was wash-coated. Note that the coat quantity at this time was 110 g/L with a CeO₂ quantity of 5.88 g/L. Then, drying and sintering were performed to form the downstream side catalyst layer. In this manner, an exhaust gas purifying catalyst according to Example 1 was obtained.

### (2) Example 2 to Example 5

Exhaust gas purifying catalysts according the respective examples were obtained in accordance with the same procedure as that in Example 1 except that the CeOz quantity in the upstream side catalyst layer and the downstream side catalyst layer was changed to the quantity shown in Table 1.

### 2. Evaluation on NOx storing characteristic

In Example 1 to Example 5 obtained above, measurement tests for the NOx storing quantity were performed. In these tests, after the exhaust gas purifying catalysts in the respective examples were cooled to 100°C or less, each exhaust gas purifying catalyst was installed in an engine exhaust system. Then, the inlet gas temperature of the catalyst was adjusted to 300°C using a heat exchanger so that the exhaust gas enters. In the exhaust gas, the ratio (λ) of an oxidizing gas component to a reducing gas component was 1.08. A NOx concentration P1 of the gas flowing into the catalyst and a NOx concentration P2 of the gas flowing out of the catalyst were measured and the NOx storing quantity (mg/L) was calculated from the difference between P1 and P2 (P1 - P2). The results are shown in Table 1.

Note that when the ratio of the oxidizing gas component to the reducing gas component, λ, is 1, it means that the state is stoichiometric and the quantity of oxidizing gas is equal to that of the reducing gas.

### [Table 1]

**Table 1**

| | First layer | | Second layer | | | NOx storing quantity (mg/L) |
|---|---|---|---|---|---|---|
| | Upstream side catalyst layer CeO₂ quantity (g/L) | Downstream side catalyst layer CeO₂ quantity (g/L) | Coat quantity (g/L) | Coat length for length L of base material in cylinder axis direction (%) | BaO quantity (g/L) | |
| Example 1 | 2.94 | 5.88 | 155 | 100 | 30 | 556 |
| Example 2 | 2.94 | 8.82 | 155 | 100 | 30 | 435 |
| Example 3 | 8.82 | 5.88 | 155 | 100 | 30 | 258 |
| Example 4 | 0 | 5.88 | 155 | 100 | 30 | 289 |
| Example 5 | 2.94 | 0 | 155 | 100 | 30 | 381 |

Table 1 indicates that the NOx storing quantity is high when each of the upstream side catalyst layer and the downstream side catalyst layer in the first layer contains Pd and Rh as the catalyst metal and the CeO₂-ZrO₂ complex oxide as the OSC material and the CeO₂ quantity in the upstream side catalyst layer is less than that of the downstream side catalyst layer. Therefore, the NOx storing characteristic is improved by the exhaust gas purifying catalyst in which the first layer includes the upstream side catalyst layer and the downstream side catalyst layer, each of the upstream side catalyst layer and the downstream side catalyst layer contains Pd and Rh as the catalyst metal and the OSC material containing Ce, the CeOz quantity C1 in the upstream side catalyst layer is less than the CeOz quantity C2 in the downstream side catalyst layer, and the second layer contains Pt as the catalyst metal and the NOx storing material.

### <Second test>

Here, using three kinds of slurries with different compositions, the second layer was formed on the base material, and then the first layer having different structures on the upstream side (front side) and the downstream side (rear side) in the exhaust gas flowing direction was formed; thus, the catalyst layer including the first layer formed of the upstream side catalyst layer and the downstream side catalyst layer, and the second layer was formed. Then, the coat quantity of the second layer, the coat length for the length L of the base material in the cylinder axis direction, and the content of the NOx storing material in the second layer were examined.

### 1. Manufacture in each example

### (1) Example 11

First, three kinds of slurries (upstream side catalyst layer formation slurry, downstream side catalyst layer formation slurry, and second layer formation slurry) were prepared in a manner similar to the first test. Using the prepared second layer formation slurry, 100% of the length L of the ceramic base material from the end part on the exhaust gas outflow side toward the inflow side direction in the cylinder axis direction (that is, the entire base material) was wash-coated. Note that the coat quantity at this time was 95 g/L with a BaO quantity of 30 g/L. Then, drying and sintering were performed to form the second layer.

Next, using the prepared upstream side catalyst layer formation slurry, 50% of the length L of the base material from an end part on the exhaust gas inflow side toward the outflow side direction in the cylinder axis direction was wash-coated in a manner similar to the first test. Then, drying and sintering were performed to form the upstream side catalyst layer.

Moreover, using the prepared downstream side catalyst layer formation slurry, 50% of the length L of the base material from an end part on the exhaust gas outflow side toward the inflow side direction in the cylinder axis direction was wash-coated in a manner similar to the first test. Then, drying and sintering were performed to form the downstream side catalyst layer. In this manner, an exhaust gas purifying catalyst according to Example 11 was obtained.

### (2) Example 12 and Example 13

Exhaust gas purifying catalysts according the respective examples were obtained in accordance with the same procedure as that in Example 11 except that the coat quantity (g/L) of the second layer was changed to the quantity shown in Table 2.

### (3) Example 14 to Example 16

Exhaust gas purifying catalysts according the respective examples were obtained in accordance with the same procedure as that in Example 11 except that the coat length (%) for the length L of the base material in the cylinder axis direction in the second layer was changed to the quantity shown in Table 2.

### (3) Example 17 to Example 20

Exhaust gas purifying catalysts according the respective examples were obtained in accordance with the same procedure as that in Example 11 except that the BaO quantity in the second layer was changed to the quantity shown in Table 2.

### 2. Evaluation on NOx storing characteristic

In Example 11 to Example 20 obtained above, the measurement tests for the NOx storing quantity were performed. Such tests were performed under the condition similar to that of the first test. The NOx concentration P1 of the gas flowing into the catalyst and the NOx concentration P2 of the gas flowing out of the catalyst were measured and the NOx storing quantity (mg/L) was calculated from the difference between P1 and P2 (P1 - P2). The results are shown in Table 2. Note that Table 2 also shows the results from Example 1 manufactured above for the comparison.

### [Table 2]

**Table 2**

| | First layer | | Second layer | | | NOx storing quantity (mg/L) |
|---|---|---|---|---|---|---|
| | Upstream side catalyst layer CeO₂ quantity (g/L) | Downstream side catalyst layer CeO₂ quantity (g/L) | Coat quantity (g/L) | Coat length for length L of base material in cylinder axis direction (%) | BaO quantity (g/L) | |
| Example 11 | 2.94 | 5.88 | 95 | 100 | 30 | 384 |
| Example 12 | 2.94 | 5.88 | 115 | 100 | 30 | 471 |
| Example 13 | 2.94 | 5.88 | 135 | 100 | 30 | 529 |
| Example 1 | 2.94 | 5.88 | 155 | 100 | 30 | 556 |
| Example 14 | 2.94 | 5.88 | 155 | 50 | 30 | 311 |
| Example 15 | 2.94 | 5.88 | 155 | 65 | 30 | 358 |
| Example 16 | 2.94 | 5.88 | 155 | 75 | 30 | 470 |
| Example 17 | 2.94 | 5.88 | 155 | 100 | 0 | 18 |
| Example 18 | 2.94 | 5.88 | 155 | 100 | 10 | 439 |
| Example 19 | 2.94 | 5.88 | 155 | 100 | 20 | 548 |
| Example 20 | 2.94 | 5.88 | 155 | 100 | 40 | 476 |

As shown in Example 1 and Example 11 to Example 13 in Table 2, when the coat quantity of the second layer is 100 g/L or more, the NOx storing quantity is higher than that in Example 11 in which the coat quantity of the second layer is less than 100 g/L. In addition, as shown in Example 1 and Example 14 to Example 16 in Table 2, when the second layer is formed in a part corresponding to 75% to 100% of the length of the base material in the cylinder axis direction from the end part on the exhaust gas outflow side toward the exhaust gas inflow side direction, the NOx storing quantity is high. Moreover, as shown in Example 1 and Example 17 to Example 20 in Table 2, when the BaO quantity in the second layer is 10 g/L or more and 40 g/L or less, the NOx storing quantity is remarkably improved.

### <Third test>

Here, using four kinds of slurries with different compositions, the third layer was formed on the base material, the second layer was formed, and then the first layer having different structures on the upstream side (front side) and the downstream side (rear side) in the exhaust gas flowing direction was formed; thus, the catalyst layer including the first layer formed of the upstream side catalyst layer and the downstream side catalyst layer, the second layer, and the third layer was formed.

### 1. Manufacture in each example

### (1) Example 21

First, four kinds of slurries (upstream side catalyst layer formation slurry, downstream side catalyst layer formation slurry, second layer formation slurry, and third layer formation slurry) were prepared. The three kinds of slurries, that is, the upstream side catalyst layer formation slurry, the downstream side catalyst layer formation slurry, and the second layer formation slurry, were prepared in a manner similar to the first test. The third layer formation slurry was prepared by mixing 110 g of Al₂O₃ powder carrying 1.9 g of Pd and Ba sulfate with an aqueous solvent.

Using the prepared third layer formation slurry, 100% of the length L of the ceramic base material from the end part on the exhaust gas outflow side toward the inflow side direction in the cylinder axis direction (that is, the entire base material) was wash-coated. Note that the coat quantity at this time was 140 g/L with a Pd quantity of 2.3 g/L. Then, drying and sintering were performed to form the third layer.

Next, using the prepared second layer formation slurry, the entire ceramic base material was wash-coated from the end part on the exhaust gas downstream side toward the upstream side direction in a manner similar to the first test. Note that the coat quantity at this time was 155 g/L with a BaO quantity of 30 g/L. Then, drying and sintering were performed to form the second layer.

Moreover, using the prepared upstream side catalyst layer formation slurry, 50% of the length L of the base material from the end part on the exhaust gas inflow side toward the outflow side direction in the cylinder axis direction was wash-coated in a manner similar to the first test. Then, drying and sintering were performed to form the upstream side catalyst layer. Moreover, using the prepared downstream side catalyst layer formation slurry, 50% of the length L of the base material from the end part on the exhaust gas outflow side toward the inflow side direction in the cylinder axis direction was wash-coated in a manner similar to the first test. Then, drying and sintering were performed to form the downstream side catalyst layer. In this manner, an exhaust gas purifying catalyst according to Example 21 was obtained.

### 2. Evaluation on NOx storing characteristic

In Example 21 obtained above, the measurement test for the NOx storing quantity was performed. Such a test was performed under the condition similar to that of the first test. The NOx concentration P1 of the gas flowing into the catalyst and the NOx concentration P2 of the gas flowing out of the catalyst were measured and the NOx storing quantity (mg/L) was calculated from the difference between P1 and P2 (P1 - P2). The results are shown in Table 3. Note that Table 3 also shows the results from Example 1 and Example 4 manufactured above for the comparison.

### [Table 3]

**Table 3**

| | First layer | | Second layer | | | Presence or absence of third layer | NOx storing quantity (mg/L) |
|---|---|---|---|---|---|---|---|
| | Upstream side catalyst layer CeO₂ quantity (g/L) | Downstream side catalyst layer CeO₂ quantity (g/L) | Coat quantity (g/L) | Coat length for length L of base material in cylinder axis direction (%) | BaO quantity (g/L) | | |
| Example 21 | 2.94 | 5.88 | 155 | 100 | 30 | Present | 552 |
| Example 1 | 2.94 | 5.88 | 155 | 100 | 30 | Absent | 556 |
| Example 4 | 0 | 5.88 | 155 | 100 | 30 | Absent | 289 |

Table 3 indicates that even if the third layer containing at least one kind among Pd, Pt, and Rh is provided in addition to the first layer and the second layer, the NOx storing quantity is higher than that in Example 4. Therefore, when the exhaust gas purifying catalyst includes the third layer containing at least one kind among Pd, Pt, and Rh in addition to the first layer formed of the upstream side catalyst layer and the downstream side catalyst layer, and the second layer, the catalyst with the excellent NOx storing characteristic can be provided.

Although the embodiments of the present invention have been described above, each of the above-described embodiments is merely one example. The present invention can be carried out in other various modes. The present invention can be carried out based on the contents disclosed in this specification and technical common sense in the field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

## Claims

1. An exhaust gas purifying catalyst that is disposed in an exhaust pipe of an internal-combustion engine and purifies exhaust gas emitted from the internal-combustion engine, comprising a base material and a catalyst layer formed on a surface of the base material, wherein
the catalyst layer has a multilayer structure of at least two layers including a first layer that is relatively far from the surface of the base material and a second layer that is closer to the surface of the base material,
the first layer includes an upstream side catalyst layer formed from an exhaust gas inflow side end part of the exhaust gas purifying catalyst toward an exhaust gas outflow side direction, and a downstream side catalyst layer formed from an exhaust gas outflow side end part of the exhaust gas purifying catalyst toward an exhaust gas inflow side direction,
each of the upstream side catalyst layer and the downstream side catalyst layer contains Pd and/or Rh as a catalyst metal and an OSC material containing Ce,
the second layer contains at least Pt as the catalyst metal and a NOx storing material, and
when a value obtained by converting, in terms of oxide, a Ce quantity in the OSC material included in the upstream side catalyst layer and the downstream side catalyst layer in the first layer is a CeO₂ quantity, the CeO₂ quantity in the upstream side catalyst layer is C1, and the CeO₂ quantity in the downstream side catalyst layer is C2, a relation of C1 < C2 is satisfied.

2. The exhaust gas purifying catalyst according to claim 1, wherein a ratio (C2/C1) of the C2 to the C1 is 1.2 to 3.

3. The exhaust gas purifying catalyst according to claim 1 or 2, wherein the NOx storing material contains at least one kind selected from the group consisting of Ba, Cs, Sr, K, Ca, and Mg.

4. The exhaust gas purifying catalyst according to any one of claims 1 to 3, wherein a coat quantity of the second layer is 100 g/L or more and 155 g/L or less per liter of a volume of the base material.

5. The exhaust gas purifying catalyst according to any one of claims 1 to 4, wherein a content of the NOx storing material in the second layer is 10 g/L or more and 40 g/L or less.

6. The exhaust gas purifying catalyst according to any one of claims 1 to 5, wherein the second layer is formed in a part corresponding to 75% to 100% of a length of the base material from the exhaust gas outflow side end part toward the exhaust gas inflow side direction.

7. The exhaust gas purifying catalyst according to any one of claims 1 to 6, wherein
the catalyst layer includes a third layer that is relatively closer to the surface of the base material than the second layer, and
the third layer contains at least one kind selected from the group consisting of Pd, Pt, and Rh.
